# EUROPEAN PATENT SPECIFICATION

(11) **EP 1 336 471 B1**
(45) Date of publication and mention of the grant of the patent: **12.03.2008**
(21) Application number: 03002090.3
(22) Date of filing: 30.01.2003
(51) Int. Cl.: B32B 21/02, E06B 3/70, B27D 1/08, A47B 96/20

(54) **Method for manufacturing curved furnishing components, particularly door panels for furniture, and article obtainable with the method**
Verfahren zur Herstellung von gewölbten Möbelkomponenten, insbesondere Möbeltüren sowie Gegenstand, der mit diesem Verfahren hergestellt wurde
Méthode de fabrication de composants galbés pour meubles, en particulier portes pour meubles et article produit par cette méthode

(30) Priority: 19.02.2002 IT MO20020041
(43) Date of publication of application: 20.08.2003
(73) Proprietor: Tecnoform S.P.A., 40056 Crespellano (Bologna) (IT)
(72) Inventor: Rossodivita, Alessandro, 40134 Bologna (IT)
(74) Representative: Brogi, Graziano

(56) References cited:
- EP-A- 1 123 672
- DE-A- 19 800 969
- US-A- 4 199 389

## Description

The present invention relates to a method for manufacturing curved furnishing components, particularly door panels for furniture, and to the article obtainable with the method.

It is known that in the field of interior decoration, for example for the production of modern-style furniture, materials that are alternative to solid wood are used which allow to obtain the most disparate decorative effects.

In particular, it is known to use multilayer materials to produce curved furnishing components, such as door panels for furniture, obtained by superimposing a plurality of panels made of different materials and mutually coupled by interposing suitable adhesives.

As an alternative, known door panels are manufactured with a hollow sandwich structure, i.e., by inserting between the outermost panels one or more layers of filling material that allow to obtain a lighter article without penalizing its strength.

One known method for producing curved hollow-sandwich door panels, for example, provides for the composition of the layered article in a flat configuration, obtained by superimposing the various layers on a workbench by interposing thermosetting adhesives, such as urea adhesives, and by subsequently pressing the article inside a mold that is shaped so as to give it the intended curvature.

Currently, pressing occurs in presses provided with heating means that facilitate and speed up the curing of the adhesive.

For this purpose, electromagnetic wave sources are generally used which are connected to centralized adjustment units and act by exciting and accordingly heating the molecules of the adhesive during pressing.

Generally, known door panels are composed of two outer plywood panels, which have an applied decorative cladding on their exposed faces; a layer of filler material is interposed between the panels and is constituted by a pair of strips of wooden material, which are arranged at two parallel sides of the outer panels and are separated by a sheet of paper-like material that occupies the interspace formed between the panels and the strips.

In order to manufacture such door panels it is necessary to use roller-type cold spreading machines for the application of the adhesive to the upper and lower surfaces of the strips and of the sheet, and presses complete with suitable molds and provided with centralized units for adjusting the wave source.

Document EP 1 123 672 discloses a method for producing an arched furniture plate which involves glueing of a strip of natural wood on at least one outer edge of a plurality of chip, fiber or lightwood boards, glueing of a number of boards thus prepared to one another, covering of at least one side of the resultant assembly with a veneer or a foil, and plastic shaping of this assembly in a press before the glue hardens.

Document DE 198 00 969 describes a connecting board and a method for its manufacture. The connecting board is composed of several layers and is curved, wherein at least the outer layers of the board are made of poplar wood to enable to produce the boards by pressing the layers together by gluing, and successively by cold pressing for two minutes.

Document US 4 199 389 discloses a curved laminated sandwich panel having a plastic foam core and surface skins. The panel is prepared by applying pressure sensitive adhesive to the adjacent faces to be joined, interposing a slip sheet between adjacent surfaces of the sheets to be laminated, positioning the sheets to be laminated within a matched die mold, removing the slip sheets and passing the matched die mold through pressure rolls to deform the sheets and conform them to the shape of the mold.

These known methods are not devoid of drawbacks, including the fact that particularly for outer panels it is necessary to use materials that withstand conventional operating conditions without being damaged and whose cost considerably affects the unit cost of the resulting articles.

Further, since the door panels must remain in the heated presses long enough to ensure the mutual adhesive bonding of the various materials, on the order of 15 minutes per part, the productivity of the dedicated facilities is penalized considerably.

Another drawback of known methods is that the presses that are used must have a complicated and expensive electronic apparatus for the controlled generation of the waves that facilitate the curing of the adhesive, the operation of which entails considerable energy consumption.

Finally, heating inside the press entails the danger of forming voltaic arcs, with consequent burning of the molds and of the articles being processed, which cause economic losses tied to the damage caused to the materials and to the molds themselves, whose maintenance is very onerous.

Finally, operators assigned to the processing of known door panels are permanently exposed to severe health risks due to the presence of the magnetic fields induced by the heating waves and to the high danger of fire in the work environment.

The aim of the present invention is to eliminate the above noted drawbacks of the known art, by providing a method for producing curved furnishing components, particularly door panels for furniture, and an article that can be obtained with the method, which allow to reduce the unit cost of the resulting articles without penalizing their quality level.

An object of the invention is to increase the speed of the required treatments, increasing the productivity and efficiency of the dedicated facilities.

This aim and this and other objects that will become better apparent hereinafter are achieved by the present method for manufacturing curved furnishing components, particularly door panels for furniture, characterized in that it comprises: a step for superimposing a first panel made of wooden, plastic or metallic material, at least one intermediate separation layer and a second panel made of wooden, plastic or metallic material, in order to obtain a flat blank, adhesive being interposed between the intermediate layer and the first and second panels; and a step for cold-shaping the blank in order to obtain a curved component.

The curved furnishing component that can be obtained with the method according to the invention is characterized in that it comprises a first panel made of wooden, plastic or metallic material, at least one intermediate separation layer, and a second panel made of wooden, plastic or metallic material, which are mutually superimposed and rigidly coupled by interposing adhesive, the component having a curved shape.

Further characteristics and advantages of the present invention will become better apparent from the following detailed description of a preferred but not exclusive embodiment of a method for manufacturing curved furnishing components, particularly door panels for furniture, and of an article that can be obtained with the method, illustrated only by way of non-limitative example in the accompanying drawings, wherein:

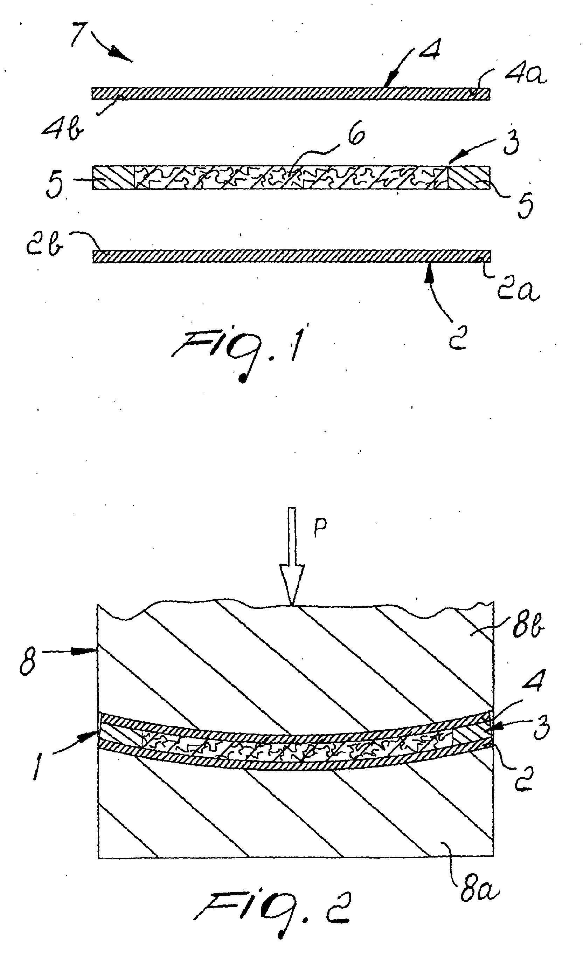

Figure 1 is a schematic partially exploded sectional view of a flat blank during the superimposition step of the method according to the invention;
Figure 2 is a schematic sectional view of a curved furnishing component during the shaping step of the method according to the invention;

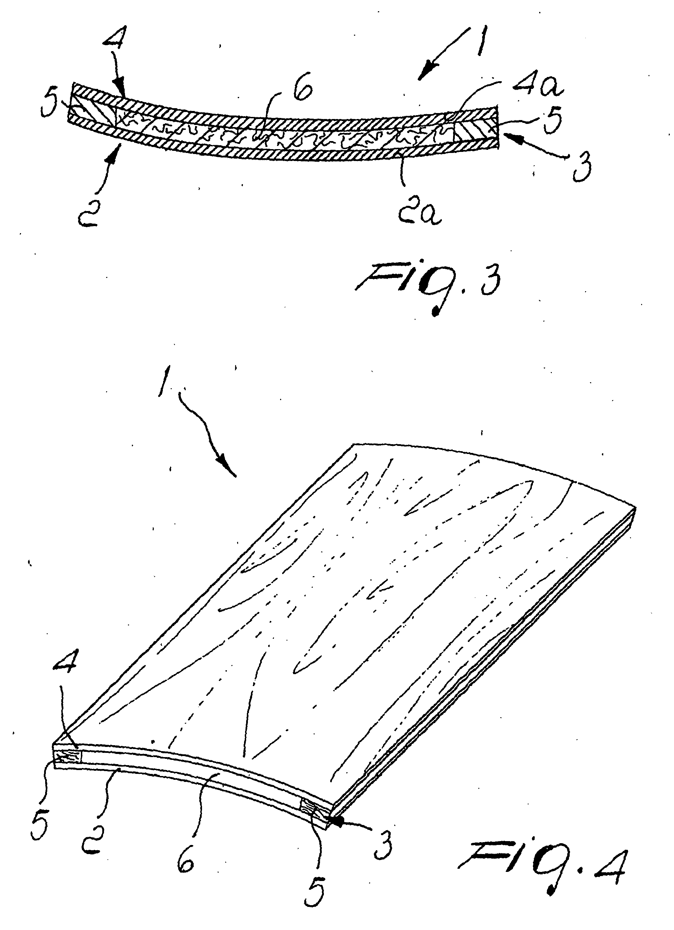

Figure 3 is a sectional view of the component of Figure 2 at the end of the shaping step;
Figure 4 is an axonometric schematic view of a curved furnishing component that can be obtained with the method according to the invention.

With reference to the figures, the reference numeral 1 designates a curved furnishing component that can be obtained with the method according to the invention.

The component 1 comprises a first panel 2 made of wooden, plastic or metallic material, an intermediate separation layer 3, and a second panel 4 made of wooden, plastic or metallic material, which are mutually superimposed and rigidly coupled by interposing adhesive, and has a curved shape.

In the particular embodiment shown in the figures, the door panel 1 has a substantially cylindrical shape, but alternative embodiments in which the door panel 1 has different curvatures are equally possible.

Advantageously, the wooden material that constitutes the first panel 2 and the second panel 4 is of the type that comprises agglomerated wood fibers, i.e., fibers that are compacted and assembled by interposing a binding agent; as an alternative, as mentioned, it is possible to use plastic or metallic material.

A material that is suitable for providing the first panel 2 and the second panel 4 is for example the one known commercially as MDF (Medium Density Fiber).

It is noted that materials based on wood fibers have a cost per cubic meter that is on the order of one third of the cost of conventional plywood, but do not provide a resistance to normal working conditions that allows their use to manufacture curved components with the usual method that entails heated pressing in order to facilitate the curing of the conventional adhesive of the thermosetting type.

Moreover, the use of these materials together with the urea adhesive, when performing pressing at ambient temperature, would not be advantageous, since the cycle times would become so long that it would be economically counterproductive to replace plywood.

Advantageously, the use of an adhesive of the pressure-reactive type, and particularly of a polyurethane adhesive, combined with the material comprising wood fibers or plastic or metallic material, makes cold-shaping convenient, since at ambient temperature, under the action of suitable pressure, the adhesive cures in a short time - on the order of a few minutes - and ensures a stable and firm connection among the various materials and the retention of the curved shape.

Pressure-reactive adhesives penetrate in the porosities of the surfaces in contact that must be bonded, and under the action of pressure they generate chemical reactions that facilitate setting, ensuring firm and stable mutual adhesive bonding of the surfaces.

Adhesive bonding is then completed by way of the chemical reaction between the adhesive and the ambient moisture.

In the first panel 2, the intermediate layer 3 and the second panel 4, the shapes and extensions of the surfaces in contact mutually coincide and are arranged one above the other so that their respective perimeters mutually mate.

In the particular embodiment shown, the surfaces are quadrangular and have matching lengths and widths.

The intermediate layer 3 comprises two parallel strips 5, between which a sheet 6 of material having the same thickness as the strips 5 is interposed.

The strips 5 are made of plywood or particlewood of poplar, MDF or other materials (for example plastic or metallic material), while the material of the sheet 6 is of the paper-like type having an alveolar structure or of the expanded polymeric type.

The strips 5 and the sheet 6 are arranged parallel to the generatrices of the curved shape of the component 1.

The intermediate layer 3 is thicker than the first panel 2 and the second panel 4, so that the component 1 has a certain overall height yet remains lightweight.

Decorative claddings, such as sheets of paper of PVC printed with wood patterns, veneers of woods, or others, can be applied to the exposed surfaces 2a and 4a of the respective panels 2 and 4.

The method according to the invention is as follows: the step for application of the decorative cladding to the exposed surfaces 2a and 4a is performed; then the step for cropping by cutting the first panel 2, the second panel 4, the strips 5 and the sheet 6, so as to bring them to size, is performed.

The step of hot distribution of the adhesive on the application surface 2b of the first panel 2 designed to be associated with the intermediate layer 3 is performed, and then the step for superimposing the intermediate layer 3 on the first panel 2 so that their respective perimeters match is performed, after placing the first panel 2 on a worktable so that the exposed surface 2a is directed downward.

The step for superimposing the intermediate layer 3 on the first panel 2 consists in arranging the strips 5 on the first panel 2 at two parallel sides thereof and then placing the sheet 6 between the strips 5.

Then the step for hot distribution of the adhesive on the laying surface 4b of the second panel 4 that is designed to be coupled to the intermediate layer 3 is performed, followed by the step for superimposing the second panel 4, arranged with its exposed surface 4a facing upward, on the intermediate layer 3, so that the respective perimeters match, obtaining a flat blank 7.

In order to distribute the adhesive on the laying surfaces 2b and 4b, it is possible to use a roller-type hot spreading machine of the conventional kind.

The hot application of the adhesive allows to keep the adhesive fluid, so as to distribute it uniformly on the first panel 2 and on the second panel 4 without damaging them.

As an alternative, it would be possible to provide a step for the hot distribution of the adhesive on the opposite surfaces of the intermediate layer 3.

The blank 7 is then sent rapidly to the cold-shaping step in order to obtain the curved component 1.

The step consists of a cold pressing performed by keeping the blank 7, for a time comprised between 1 and 7 minutes, under the action of a pressure comprised between 1 and 6 kg/cm² at ambient temperature.

By applying a pressure of 4 kg/cm², for example, it is possible to obtain stably the intended curvature in approximately 3 minutes.

Pressing can be performed by way of conventional static presses, arranging the blank 7 inside a mold 8 and leaving it closed in the press at ambient temperature for the preset time under the action of the pressure p.

The blank 7 is placed inside the mold 8 so that the strips 5 and the sheet 6 are parallel to the generatrices of the curved shape to be obtained.

The mold 8 is shaped so as to give the blank 7 the intended curved shape and is constituted by a fixed lower portion 8a, which has a cylindrical and concave shape, and by a removable upper portion 8b, which has a cylindrical and convex shape.

In this case, the cropping step is performed to bring the first panel 2, the intermediate layer 3 and the second panel 4 to the size of the mold 8.

As an alternative, it is possible to perform pressing by means of profile shaping roller conveyors of the conventional type, obtaining the additional advantage of continuous production, allowed by the quick setting of the adhesives used.

At the end of the shaping step there is a holding step, i.e., the curved component 1, extracted previously from the mold 8, must wait a few hours before being sent to the subsequent treatments so as to ensure the complete setting of the adhesive.

As an alternative to the described embodiment, it is possible to provide for the application of the decorative cladding on one or both of the exposed surfaces downstream of the shaping step.

Advantageously, the method according to the invention allows to eliminate from the work environment the aforementioned health risks for operators.

Further, the method, by not requiring heating during the shaping step, allows to provide molds that are longer than conventional ones or vertically arranged gang molds if the press used has more than one compartment.

In practice it has been found that the described invention achieves the intended aim and object.

The disclosures in Italian Patent Application No. MO2002A000041 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing curved furnishing components, particularly door panels for furniture, **characterized in that** it comprises the steps of:
- superimposing a first panel (2) made of wooden, plastic or metallic material, at least one intermediate separation layer (3) and a second panel (4) made of wooden, plastic or metallic material, in order to obtain a flat blank,
- interposing an adhesive of the polyurethane type between said intermediate layer and said first and second panels alternatively by hot distributing said adhesive on the surfaces of said first and second panels that are suitable to be associated with said intermediate layer or hot distributing said adhesive on the surfaces of said intermediate layer that are suitable to be associated with said first and second panels; and
- cold-shaping the blank in order to obtain a curved component (1).

2. The method according to claim 1, **characterized in that** said wooden material is of the type that comprises agglomerated wood fibers.

3. The method according to one or more of the preceding claims, **characterized in that** said shaping step consists of a cold pressing of said blank for a time interval comprised between 1 and 7 minutes and with a pressure comprises between 1 and 6 kg/cm².

4. The method according to one or more of the preceding claims, **characterized in that** said pressing is performed by means of static presses inside a mold that is suitable to give said blank a curved shape of any kind.

5. The method according to one or more of the preceding claims, **characterized in that** said pressing is performed by means of profile shaping roller conveyors.

6. The method according to one or more of the preceding claims, **characterized in that** it comprises a step for the application of a decorative cladding on the exposed surface of at least one of said first and second panels.

7. The method according to one or more of the preceding claims, **characterized in that** it comprises a step for cropping said first and second panels and said layer.

8. The method according to one or more of the preceding claims, **characterized in that** it comprises a step for holding said component that is suitable to facilitate the setting of said adhesive.

9. The method according to one or more of the preceding claims, **characterized in that** said intermediate layer comprises two strips that are arranged substantially parallel to each other and between which a sheet of alveolar paper-like material or expanded polymeric material is interposed, said strips and said sheet having substantially identical thicknesses.

10. A curved furniture component (1) obtainable with the method according to one or more of the preceding claims, **characterized in that** it comprises a first panel (2) made of wooden, plastic or metallic material, at least one intermediate separation layer (3) and a second panel (4) made of wooden, plastic or metallic material, which are mutually superimposed and rigidly coupled by interposition of adhesive of the polyurethane type, the component (1) having a curved shape.

11. The component according to claim 10, **characterized in that** said wooden material is of the type that comprises agglomerated wood fibers.

12. The component according to one or more of the preceding claims, **characterized in that** said intermediate layer (3) comprises two substantially **parallel strips (5) between which a sheet (6) of alveolar paper-like material or expanded polymeric material is interposed, said strips (5) and said sheet** (6) having substantially equal thicknesses.

13. The component according to one or more of the preceding claims, **characterized in that** the exposed surface (2a, 4a) of at least one of said first (2) and second (4) panels has associated decorative claddings.

## Patentansprüche

1. Verfahren zur Herstellung von gewölbten Möbelkomponenten, insbesondere von Türfüllungen für Möbel, **dadurch gekennzeichnet ist, dass** es die folgenden Schritte umfasst:
- Übereinanderlagern einer ersten Paneele (2), die aus Holz, Kunststoff oder einem metallischen Material hergestellt ist, mindestens einer Trennzwischenlage (3) und einer zweiten Paneele (4), die aus Holz, Kunststoff oder einem metallischen Material hergestellt ist, um einen flachen Zuschnitt zu erhalten,
- Einbringen eines Klebstoffs des Polyurethantyps zwischen der Trennzwischenlage und der ersten und der zweiten Paneele, entweder durch eine heiße Verteilung des Klebstoffs auf den Flächen der ersten und der zweiten Paneele, die zum Verbund mit der Trennzwischenlage vorgesehen sind, oder durch eine heiße Verteilung des Klebstoffs auf den Flächen der Trennzwischenlage, die zum Verbund mit der ersten und der zweiten Paneele dienen, sowie
- Kaltformgebung des Zuschnitts, um eine gewölbte Komponente (1) zu erhalten.

2. Verfahren gemäß Anspruch 1, **dadurch gekennzeichnet, dass** der Holzwerkstoff aus einer Holzart besteht, die zusammengepresste Holzfasern aufweist.

3. Verfahren gemäß einem oder mehreren der vorhergehenden Ansprüche, **dadurch gekennzeichnet, dass** der Schritt der Formgebung aus einem kalten Verpressen des Zuschnitts mit einem Zeitintervall zwischen 1 und 7 Minuten und mit einem Druck zwischen 1 und 6 kg/cm² besteht.

4. Verfahren gemäß einem oder mehreren der vorhergehenden Ansprüche, **dadurch gekennzeichnet, dass** dieses Verpressen mithilfe von statischen Pressvorrichtungen im Innenbereich eines Formwerkstücks durchgeführt wird, welches sich eignet, dem Zuschnitt eine gewölbte Form in jeder gewünschten Art zu verleihen.

5. Verfahren gemäß einem oder mehreren der vorhergehenden Ansprüche, **dadurch gekennzeichnet, dass** dieses Verpressen mithilfe von Profilform-Rollenförderern durchgeführt wird.

6. Verfahren gemäß einem oder mehreren der vorhergehenden Ansprüche, **dadurch gekennzeichnet, dass** es einen Schritt für die Aufbringung einer dekorativen Verblendung auf den exponierten Oberflächen von mindestens einer der ersten oder/und zweiten Paneele umfasst.

7. Verfahren gemäß einem oder mehreren der vorhergehenden Ansprüche, **dadurch gekennzeichnet, dass** es einen Schritt zur Verkürzung der ersten und der zweiten Paneele sowie der Trennzwischenlage aufweist.

8. Verfahren gemäß einem oder mehreren der vorhergehenden Ansprüche, **dadurch gekennzeichnet, dass** es einen Schritt zum Aufbewahren der genannten Komponente umfasst, der geeignet ist, das Abbinden des Klebstoffs zu fördern.

9. Verfahren gemäß einem oder mehreren der vorhergehenden Ansprüche, **dadurch gekennzeichnet, dass** die Trennzwischenlage zwei Leisten aufweist, die im Wesentlichen parallel zueinander angeordnet sind, und zwischen denen sich eine Schicht aus zellenartigem, pappeähnlichem Werkstoff, oder ein geschäumtes Polymermaterial befindet, wobei diese Leisten und die Schicht eine im Wesentlichen identische Dicke aufweisen.

10. Gewölbte Möbelkomponente (1), die mithilfe des Verfahrens gemäß einem oder mehreren der vorhergehenden Ansprüche bereitgestellt werden kann; **dadurch gekennzeichnet, dass** sie eine erste Paneele (2) aufweist, die aus Holz, Kunststoff oder einem metallischen Material gefertigt ist, mindestens eine Trennzwischenlage (3), sowie eine zweite Paneele (4) umfasst, die aus Holz, Kunststoff oder einem metallischen Material hergestellt ist, welche gegenseitig übereinandergelagert und durch das Dazwischeneinbringen eines Klebstoffes des Polyurethantyps fest verbunden sind, wobei die Komponente (1) eine gewölbte Formgebung besitzt.

11. Komponente gemäß Anspruch 10, **dadurch gekennzeichnet, dass** der genannte Holzwerkstoff aus einer Holzart besteht, die zusammengepresste Holzfasern aufweist.

12. Komponente gemäß einem oder mehreren der vorhergehenden Ansprüche, **dadurch gekennzeichnet, dass** die Trennzwischenlage (3) zwei im Wesentlichen parallel angeordnete Leisten (5) aufweist, zwischen denen sich eine Schicht (6) aus zellenartigem, pappeähnlichem Werkstoff, oder ein geschäumtes Polymermaterial befindet, wobei diese Leisten (5) und die Schicht (6) eine im Wesentlichen gleichmäßige Dicke besitzen.

13. Komponente gemäß einem oder mehreren der vorhergehenden Ansprüche, **dadurch gekennzeichnet, dass** auf den exponierten Oberflächen (2a, 4a) von mindestens einer der ersten (2) oder/und der zweiten (4) Paneele dekorative Verblendungen hinzugefügt sind.

## Revendications

1. Procédé de fabrication d'éléments de mobilier incurvés, en particulier de panneaux de porte pour des meubles, ***caractérisé en ce qu'***il comprend les étapes de :
- superposition d'un premier panneau (2) fait d'un matériau en bois, en plastique ou métallique, d'au moins une couche intermédiaire de séparation (3), et d'un deuxième panneau (4) fait d'un matériau en bois, en plastique ou métallique, de manière à obtenir une ébauche plate,
- interposition d'un adhésif de type polyuréthane entre ladite couche intermédiaire et lesdits premier et deuxième panneaux alternativement par distribution à chaud dudit adhésif sur les surfaces desdits premier et deuxième panneaux qui sont aptes à être associées à ladite couche intermédiaire ou par distribution à chaud dudit adhésif sur les surfaces de ladite couche intermédiaire qui sont aptes à être associées auxdits premier et deuxième panneaux ; et
- formage à froid de l'ébauche de manière à obtenir un élément incurvé (1).

2. Procédé selon la revendication 1, ***caractérisé en ce que*** ledit matériau en bois est de type comprenant des fibres de bois agglomérées.

3. Procédé selon l'une ou plusieurs des revendications précédentes, ***caractérisé en ce que*** ladite étape de formage consiste en un pressage à froid de ladite ébauche pendant une durée comprise entre 1 et 7 minutes et avec une pression comprise entre 1 et 6 kg/cm².

4. Procédé selon l'une ou plusieurs des revendications précédentes, ***caractérisé en ce que*** ledit pressage est effectué au moyen de presses statiques à l'intérieur d'un moule qui est apte à donner à l'ébauche une forme incurvée de type quelconque.

5. Procédé selon l'une ou plusieurs des revendications précédentes, ***caractérisé en ce que*** ledit pressage est effectué au moyen de transporteurs à galets de profilage.

6. Procédé selon l'une ou plusieurs des revendications précédentes, ***caractérisé en ce qu'***il comprend une étape d'application d'un plaquage décoratif sur la surface apparente d'au moins l'un d'entre lesdits premier et deuxième panneaux.

7. Procédé selon l'une ou plusieurs des revendications précédentes, ***caractérisé en ce qu'***il comprend une étape pour découper lesdits premier et deuxième panneaux et ladite couche.

8. Procédé selon l'une ou plusieurs des revendications précédentes, ***caractérisé en ce qu*'**il comprend une étape de maintien dudit composant qui est apte à faciliter la prise dudit adhésif.

9. Procédé selon l'une ou plusieurs des revendications précédentes, ***caractérisé en ce que*** ladite couche intermédiaire comprend deux bandes qui sont agencées de manière sensiblement parallèle entre elles et entre lesquelles est interposée une feuille de matériau alvéolaire semblable à du papier ou de matériau polymère expansé, lesdits bandes et ladite feuille ayant une épaisseur sensiblement identique.

10. Elément de mobilier incurvé (1) pouvant être obtenu avec le procédé selon l'une ou plusieurs des revendications précédentes, ***caractérisé en ce qu'**il* comprend un premier panneau (2) fait d'un matériau en bois, en plastique ou métallique, au moins une couche intermédiaire de séparation (3), et un deuxième panneau (4) fait d'un matériau en bois, en plastique ou métallique, qui sont superposés et couplés rigidement les uns aux autres par interposition d'un adhésif de type polyuréthane, l'élément (1) ayant une forme incurvée.

11. Elément selon la revendication 10, ***caractérisé en ce que*** ledit matériau en bois est de type comprenant des fibres de bois agglomérées.

12. Elément selon l'une ou plusieurs des revendications précédentes, ***caractérisé en ce que*** ladite couche intermédiaire (3) comprend deux bandes (5) sensiblement parallèles entre lesquelles est interposée une feuille (6) de matériau alvéolaire semblable à du papier ou de matériau polymère expansé, lesdits bandes (5) et ladite feuille (6) ayant des épaisseurs sensiblement égales.

13. Elément selon l'une ou plusieurs des revendications précédentes, ***caractérisé en ce que*** la surface apparente (2a, 4a) d'au moins l'un d'entre lesdits premier (2) et deuxième (4) panneaux comporte des placages décoratifs associés.
